# EUROPÄISCHE PATENTSCHRIFT

(11) **EP 1 330 601 B1**
(45) Veröffentlichungstag und Bekanntmachung des Hinweises auf die Patenterteilung: **02.02.2005**
(21) Anmeldenummer: 01988820.5
(22) Anmeldetag: 23.10.2001
(51) Int. Cl.: F02M 61/16, F02M 61/18, F02M 51/06

(54) **BRENNSTOFFEINSPRITZVENTIL**
FUEL INJECTION VALVE
SOUPAPE D'INJECTION DE CARBURANT

(30) Priorität: 23.10.2000 DE 10052485
(43) Veröffentlichungstag der Anmeldung: 30.07.2003
(73) Patentinhaber: ROBERT BOSCH GMBH, 70442 Stuttgart (DE)
(72) Erfinder: DANTES, Guenter, 71735 Eberdingen (DE); NOWAK, Detlef, 74199 Untergruppenbach (DE)
(74) Vertreter: Körfer, Thomas, Dipl.-Phys.
(86) Internationale Anmeldenummer: PCT/DE2001/003979
(87) Internationale Veröffentlichungsnummer: WO 2002/035082

(56) Entgegenhaltungen:
- EP-A- 0 971 124
- WO-A-02/29242
- DE-A- 3 439 892
- DE-A- 3 643 523
- DE-A- 19 625 059
- US-A- 5 288 025

## Beschreibung

### Stand der Technik

Die Erfindung geht aus von einem Brennstoffeinspritzventil nach der Gattung des Hauptanspruchs, wie aus der Druckshrift DE 196 25 059 A bekannt.

Brennstoffeinspritzventile, welche eine Scheibe mit Brennstoffkanälen zur Führung eines Ventilschließkörpers und zur Erzeugung eines Dralls der Brennstoffströmung besitzen, sind aus der DE 36 43 523 Al bekannt. Die Brennstoffkanäle weisen eine Tangentialkomponente auf, die den Geschwindigkeitsvektor der Strömung mit einer Umfangskomponente versieht. Der durch den Gesamtquerschnitt der Brennstoffkanäle offene Strömungsquerschnitt wirkt begrenzend auf die Durchflußmenge. Die Drosselung der Strömung erzeugt einen Druckabfall an der Scheibe, die zur Ausbildung einer dichtenden Flächenpressung und zur Vermeidung von Nebenstromwegen, genutzt wird. Die Zumessung des Brennstoffs und die Ausbildung eines Dralls erfolgen stromaufwärts des Dichtsitzes. Durch eine zentral in der Scheibe eingebrachte Bohrung wird zudem der Ventilschließkörper bzw. die Ventilnadel radial geführt, wobei die Toleranz des zwischen der Ventilnadel bzw. des Ventilschließkörpers ausgebildeten Spalts so gewählt ist, daß sich eine hydraulisch dichtende Passung ergibt.

Aus der DE 196 25 059 Al ist ein weiteres Brennstoffeinspritzventil bekannt, bei dem die Zumessung der Brennstoffmenge und die Ausbildung einer drallbehafteten Strömung ebenfalls stromaufwärts des Dichtsitzes erfolgen. Die Brennstoffkanäle, über die die Zumessung des Brennstoffs erfolgt, sind dabei entweder als Bohrungen oder als Nuten ausgeführt, wobei die Nuten durch die Ventilsitzfläche zu Drallkanälen verschlossen werden.

Beide angegebenen Brennstoffeinspritzventile besitzen Brennstoffkanäle, über deren Querschnitt die Zumessung einer definierten Brennstoffmenge erfolgt. Durch Tangentialkomponenten der Brennstoffkanäle wird gleichzeitig ein Drall in der Brennstoffströmung erzeugt. Die Einhaltung enger Toleranzen beim Einbringen der Strömungskanäle ist daher für eine exakte Zumessung der einzuspritzenden Menge an Brennstoff von entscheidender Bedeutung. Nachteilig ist die dadurch bedingte kostenintensive Fertigung.

Ein weiterer Nachteil der angegebenen Brennstoffeinspritzventile ist die starke Reaktion auf eine Verschmutzung der Kanäle. Durch eine Änderung des Querschnitts in Folge verschmutzter Kanäle folgt eine Änderung der Zumeßmenge und durch die Drallbildung zudem eine Änderung des Strahlwinkels.

Weiterhin nachteilig ist eine mögliche Ablagerung von in dem Brennstoff befindlichen Schmutz im Bereich des Ventildichtsitzes. Ablagerungen, die im Bereich der Ventilsitzfläche gebildet werden, verhindern ein vollständiges Schließen des Brennstoffeinspritzventils und können so einen geringfügigen Austritt von Brennstoff nach Abschluß des Abspritzvorgangs ermöglichen. Die Folge ist eine verschlechterte Gemischbildung und Verbrennung.

### Vorteile der Erfindung

Das erfindungsgemäße Brennstoffeinspritzventil mit dem kennzeichnenden Merkmal des Anspruchs 1 hat demgegenüber den Vorteil, daß Schmutzpartikeln, die mit der Brennstoffströmung durch die Drallkanäle hindurchtransportiert werden, auf dem weiteren Strömungsweg keine Möglichkeit zur Ablagerung gegeben ist. Die Drallkanäle stellen die engste Abmessung auf dem Strömungsweg bis zur Abspritzöffnung dar. Eine Verschmutzung des Dichtsitzes kann dadurch verhindert werden.

Durch die in den Unteransprüchen aufgeführten Maßnahmen sind vorteilhafte Weiterbildungen des im Hauptanspruch angegebenen Brennstoffeinspritzventils möglich.

Der geringe Durchmesser des einzelnen Drallkanals wirkt als Filter für Schmutzpartikel, die sich in der Brennstoffströmung befinden. An der stromaufwärtigen Seite der Drallscheibe werden die Schmutzpartikel ausgefiltert.

Weiterhin vorteilhaft ist der geringe Einfluß auf die Ausbildung eines Dralls bei Verschmutzung einzelner Drallkanäle. Die Verstopfung die durch Ausfiltern von angeschwemmten Schmutzpartikeln auf der stromaufwärtigen Seite der Drallscheibe entstehen kann, reduziert den gesamten freien Strömungsquerschnitt nur um einen geringen Anteil. Dadurch ergibt sich ein vernachlässigbarer Einfluß auf die Drallbildung.

### Zeichnung

Ein Ausführungsbeispiel der Erfindung ist in der Zeichnung vereinfacht dargestellt und in der nachfolgenden Beschreibung näher erläutert. Es zeigen:
- Fig. 1: einen schematischen Teilschnitt durch ein Ausführungsbeispiel eines erfindungsgemäßes Brennstoffeinspritzventil;
- Fig. 2: einen schematischen Teilschnitt im Ausschnitt II der Fig. 1 durch das Ausführungsbeispiel des erfindungsgemäßen Brennstoffeinspritzventils mit Anlagefläche in axialer Richtung und
- Fig. 3: eine Ansicht der stromaufwärtigen Seite einer Drallscheibe des Ausführungsbeispiels des erfindungsgemäßen Brennstoffeinspritzventils.

### Beschreibung des Ausführungsbeispiels

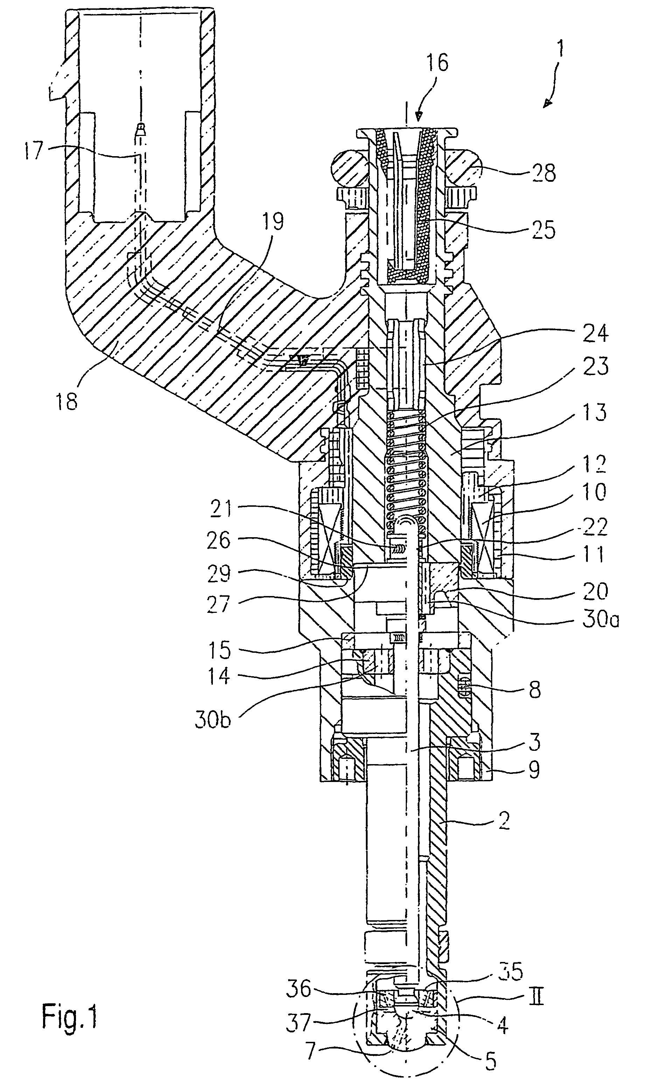

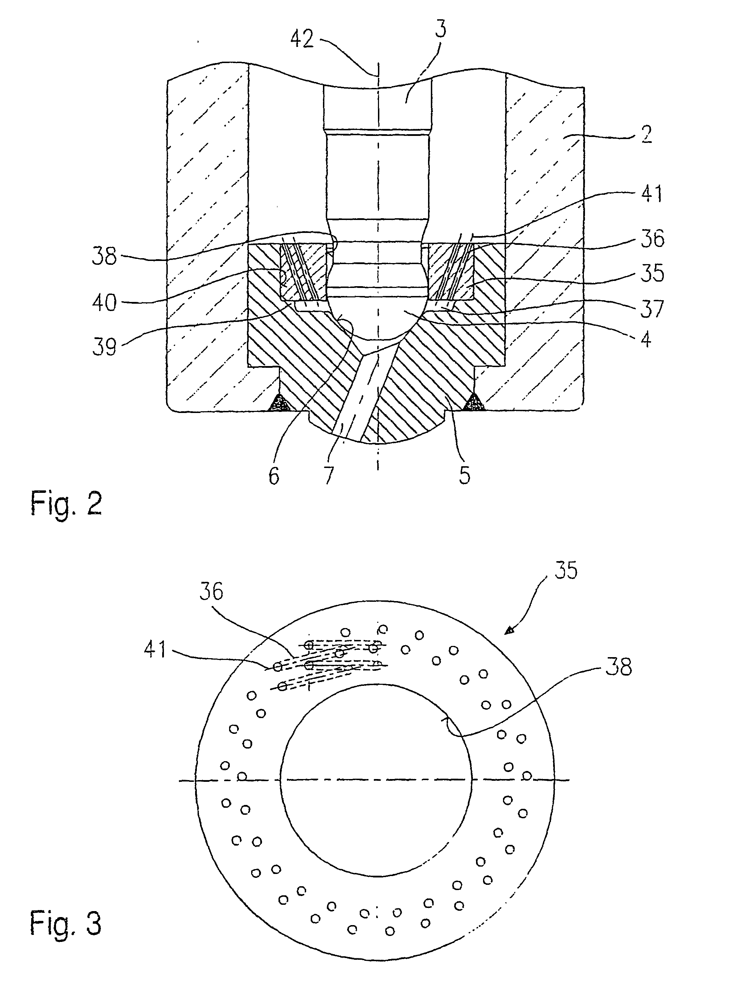

Bevor anhand der Figuren 2 und 3 ein Ausführungsbeispiel einer Drallscheibe eines erfindungsgemäßen Brennstoffeinspritzventils 1 näher beschrieben wird, soll zum besseren Verständnis der Erfindung zunächst anhand von Fig. 1 das erfindungsgemäße Brennstoffeinspritzventil 1 in einer Gesamtdarstellung bezüglich seiner wesentlichen Bauteile kurz erläutert werden.

Das Brennstoffeinspritzventil 1 ist in der Form eines Brennstoffeinspritzventils für Brennstoffeinspritzanlagen von gemischverdichtenden, fremdgezündeten Brennkraftmaschinen ausgeführt. Das Brennstoffeinspritzventil 1 eignet sich insbesondere zum direkten Einspritzen von Brennstoff in einen nicht dargestellten Brennraum einer Brennkraftmaschine.

Das Brennstoffeinspritzventil 1 besteht aus einem Düsenkörper 2, in welchem eine Ventilnadel 3 angeordnet ist. Die Ventilnadel 3 steht in Wirkverbindung mit einem Ventilschließkörper 4, der mit einer auf einem Ventilsitzkörper 5 angeordneten Ventilsitzfläche 6 zu einem Dichtsitz zusammenwirkt. Bei dem Brennstoffeinspritzventil 1 handelt es sich im Ausführungsbeispiel um ein nach innen öffnendes elektromagnetisch betätigtes Brennstoffeinspritzventil 1, welches über eine Abspritzöffnung 7 verfügt. Der Düsenkörper 2 ist durch eine Dichtung 8 gegen den Außenpol 9 einer Magnetspule 10 abgedichtet. Die Magnecspule 10 ist in einem Spulengehäuse 11 gekapselt und auf einen Spulenträger 12 gewickelt, welcher an einem Innenpol 13 der Magnetspule 10 anliegt. Der Innenpol 13 und der Außenpol 9 sind durch einen Spalt 26 voneinander getrennt und stützen sich auf einem Verbindungsbauteil 29 ab. Die Magnetspule 10 wird über eine Leitung 19 von einem über einen elektrischen Steckkontakt 17 zuführbaren elektrischen Strom erregt. Der Steckkontakt 17 ist von einer Kunststoffummantelung 18 umgeben, die am Innenpol 13 angespritzt sein kann.

Die Ventilnadel 3 ist in einer Ventilnadelführung 14 geführt, welche scheibenförmig ausgeführt ist. Zur Hubeinstellung dient eine zugepaarte Einstellscheibe 15. An der anderen Seite der Einstellscheibe 15 befindet sich ein Anker 20. Dieser steht über einen Flansch 21 kraftschlüssig mit der Ventilnadel 3 in Verbindung, welche durch eine Schweißnaht 22 mit dem Flansch 21 verbunden ist. Auf dem Flansch 21 stützt sich eine Rückstellfeder 23 ab, welche in der vorliegenden Bauform des Brennstoffeinspritzventils 1 durch eine Hülse 24 auf Vorspannung gebracht wird.

In der Ventilnadelführung 14 und im Anker 20 verlaufen Brennstoffkanäle 30a und 30b. In einer zentralen Brennstoffzufuhr 16 ist ein Filterelement 25 angeordnet. Das Brennstoffeinspritzventil 1 ist durch eine Dichtung 28 gegen eine nicht dargestellte Verteilerleitung abgedichtet.

Im Ruhezustand des Brennstoffeinspritzventils 1 wird der Anker 20 über den Flansch 21 an der Ventilnadel 3 von der Rückstellfeder 23 entgegen seiner Hubrichtung so beaufschlagt, daß der Ventilschließkörper 4 an der Ventilsitzfläche 6 in dichtender Anlage gehalten wird. Bei Erregung der Magnetspule 10 baut diese ein Magnetfeld auf, welches den Anker 20 entgegen der Federkraft der Rückstellfeder 23 in Hubrichtung bewegt, wobei der Hub durch einen in der Ruhestellung zwischen dem Innenpol 13 und dem Anker 20 befindlichen Arbeitsspalt 27 vorgegeben ist. Der Anker 20 nimmt den Flansch 21, welcher mit der Ventilnadel 3 verschweißt ist, und damit die Ventilnadel 3 ebenfalls in Hubrichtung mit. Der mit der Ventilnadel 3 in Wirkverbindung stehende Ventilschließkörper 4 hebt von der Ventilsitzfläche 6 ab und der über Drallkanäle 36 zur Abspritzöffnung 7 gelangende Brennstoff wird abgespritzt.

Wird der Spulenstrom abgeschaltet, fällt der Anker 20 nach genügendem Abbau des Magnetfeldes durch den Druck der Rückstellfeder 23 auf den Flansch 21 vom Innenpol 13 ab, wodurch sich die Ventilnadel 3 entgegen der Hubrichtung bewegt. Dadurch setzt der Ventilschließkörper 4 auf der Ventilsitzfläche 6 auf, und das Brennstoffeinspritzventil 1 wird geschlossen.

Fig. 2 zeigt in einer auszugsweisen Schnittdarstellung ein Ausführungsbeispiel der Drallscheibe 35 mit anschließender Drallkammer 37 eines erfindungsgemäßen Brennstoffeinspritzventils 1.

Die Drallscheibe 35 ist scheibenförmig und ist in einer zylinderförmigen Ausnehmung 40 des Ventilsitzkörpers 5 fixiert. Zur Befestigung kann die Drallscheibe 35 beispielsweise in den Ventilsitzkörper 5 eingepreßt sein. In axialer Richtung verbleibt zwischen Ventilsitzkörper 5 und Drallscheibe 35 ein Spalt, der eine Drallkammer 37 bildet. Die Drallscheibe 35 besitzt eine zentrale Bohrung 38 zur Führung des Ventilschließkörpers 4. Die Bohrung 38 ist gegenüber dem Durchmesser des Ventilschließkörpers 4 so toleriert, daß ein sich zwischen Ventilschließkörper 4 und Drallscheibe 35 als Nebenstromweg für den Brennstoff ausbildender Spalt verhindert wird.

Zur Strömungsführung sind in die Drallscheibe 35 eine Vielzahl von Drallkanälen 36 eingebracht, deren Mittelachsen 41 in gleichen oder unterschiedlichen Winkeln gegenüber der Mittelachse 42 des Brennstoffeinspritzventils 1 geneigt sein können. Bei geöffnetem Brennstoffeinspritzventil 1 strömt durch die Drallkanäle 36 der Brennstoff in die Drallkammer 37. Dort erhält er aufgrund einer Tangentialkomponente der Drallkanäle 36 eine Umfangsgeschwindigkeit. Der so ausgebildete Drall des Brennstoffs führt zum Abspritzen des Brennstoffs auf einem Kegelmantel, dessen Öffnungswinkel von der Ausbildung des Dralls in der Drallkammer 37 abhängt. Die Drallkammer 37 ist zylindrisch ausgebildet und wird in der Höhe durch den Ventilsitzkörper 5 und die Drallscheibe 35 begrenzt.

Der Durchmesser der Drallkanäle 36 ist kleiner als der Durchmesser von Schmutzpartikeln, die sich im Brennstoff befinden. Die Drallscheibe 35 ergänzt somit die Funktion des Filters 25. Gleichzeitig kann der Gesamtquerschnitt der Drallkanäle die Zumeßmenge des Brennstoffs für das vollständig geöffnete Brennstoffeinspritzventil bestimmen.

Die Höhe der Drallkammer 37 ist durch einen Anschlag 39 fest vorgegeben. Die Drallscheibe 35 wird so weit in den Ventilsitzkörper 5 eingebracht, bis sie an dem Anschlag 39 anliegt. Der Anschlag 39 kann in Form eines in die zylindrische Ausnehmung 40 des Ventilsitzkörpers 5 hineinragenden ringförmigen Absatzes gestaltet sein und bildet gleichzeitig die radiale Begrenzung der Drallkammer 37. Dabei muß der Innendurchmesser des ringfömrigen Absatzes 39 gerade so groß sein, daß die stromabwärtige Seite der Drallkanäle 36 in die Drallkammer 37 ausmündet.

Der Ventilschließkörper 4 weist auf seiner den Dichtsitz bildenden Seite vorzugsweise eine kugelförmige Geometrie auf und bleibt bei Verkippung der Ventilnadel 3 gegenüber der Mittelachse des Brennstoffeinspritzventils 1 in dichtender Anlage mit dem Ventilsitzkörper 5.

In Fig. 3 ist die Drallscheibe 35 in Ansicht von ihrer stromaufwärtigen Seite gezeigt. Die Drallkanäle 36 sind z.B. auf zwei konzentrischen Lochkreisen angeordnet. Die Mittelachsen 41 der Drallkanäle 36 weisen vorzugsweise identische Abstände entlang des Umfangs des jeweiligen Lochkreises auf und verlaufen bezüglich der Mittelachse des Brennstoffeinspritzventils 1 schief aber parallel zueinander.

Ein einzelner Drallkanal 36 bildet die engste durchströmte Stelle auf dem Strömungsweg des Brennstoffs bis zu der Abspritzöffnung 7. Stromabwärts der Drallscheibe 35 ist die kleinste Ausdehnung des Strömungsweges in jeder Raumrichtung größer als der Durchmesser eines einzelnen Drallkanals 36. Insbesondere hebt der Ventilschließkörper 4 daher soweit ab, daß der zwischen dem abgehobenen Ventilschließkörper 4 und der Ventilsitzfläche 6 ausgebildete Spalt in radialer Richtung von dem Mittelpunkt des kugelförmigen Ventilschließkörpers 4 ausgehend an seiner engsten Stelle größer ist, als der Durchmesser des dünnsten Drallkanals 36. Dadurch wird das Festsetzen von Schmutzpartikeln die von der Brennstoffströmung durch die Drallkanäle 36 transportiert werden, im Bereich der Drallkammer 37 oder des Ventildichtsitzes verhindert. Vorzugsweise ist der Durchmesser der Drallkanäle 36 kleiner als der Öffnungshub, um welchen der Ventilschließkörper 4 bei der Öffnungsbewegung von der Ventilsitzfläche 6 abhebt. Dadurch wird sichergestellt, daß Feinschmutzteile, von der Drallscheibe 35 zurückgehalten werden, wenn sie größer sind als der Öffnungshub. Eine Verschmutzung und Blockade des Dichtsitzes wird so verhindert.

Die Dichtfunktion des Ventilschließkörpers 4 und der korrespondierenden Ventilsitzfläche 6 über die Lebensdauer des Brennstoffeinspritzventils 1 ist so gewährleistet.

Das Einbringen der Drallkanäle 36 kann z.B. durch Bohren mittels Laser oder durch Microerodieren erfolgen. Das Einbringen der Drallkanäle 36 geschieht vorzugsweise vor dem Härten der Drallscheibe 35 und dem Führungsspielschleifen

## Patentansprüche

1. Brennstoffeinspritzventil (1) für Brennstoffeinspritzanlagen von Brennkraftmaschinen mit einem Ventilsitzkörper (5), der eine Ventilsitzfläche (6) aufweist, die mit einem Ventilschließkörper (4) zu einem Dichtsitz zusammenwirkt,
einer Drallscheibe (35), die Drallkanäle (36) mit Tangentialkomponente zur Drallerzeugung aufweist und stromaufwärts der Ventilsitzfläche (6) des Ventilsitzkörpers (5) angeordnet ist, und
einer zwischen der Drallscheibe (35) und dem Ventilsitzkörper (5) ausgebildeten Drallkammer (37),
**dadurch gekennzeichnet,**
**daß** die minimale Ausdehnung stromabwärts der Drallscheibe (35) angeordneter Strömungswege in beliebiger Raumrichtung größer ist als der kleinste Durchmesser eines jeden Drallkanals (36) in der Drallscheibe (35) und
**daß** der kleinste Durchmesser eines jeden Drallkanals (36) kleiner als der Öffnungshub ist, um welchen der Ventilschließkörper (4) bei der Öffnungsbewegung von der Ventilsitzfläche (6) abhebt.

2. Brennstoffeinspritzventil nach Anspruch 1,
**dadurch gekennzeichnet,**
**daß** eine Vielzahl von Drallkanälen (36) auf mehreren konzentrischen Lochkreisen angeordnet sind.

3. Brennstoffeinspritzventil nach Anspruch 1 oder 2,
**dadurch gekennzeichnet,**
**daß** die Drallkanäle (36) unterschiedliche Durchmesser aufweisen.

4. Brennstoffeinspritzventil nach einem der Ansprüche 1. bis 3,
**dadurch gekennzeichnet,**
**daß** die Drallkanäle (36) unterschiedliche Orientierungen aufweisen.

5. Brennstoffeinspritzventil (1) nach einem der Ansprüche 1 bis 4,
**dadurch gekennzeichnet,**
**daß** die Drallscheibe (35) wenigstens 100 Drallkanäle (36) aufweist.

6. Brennstoffeinspritzventil (1) nach einem der Ansprüche 1 bis 5,
**dadurch gekennzeichnet,**
**daß** die Drallkanäle (36) mittels Laserbohren in die Drallscheibe (35) eingebracht sind.

7. Brennstoffeinspritzventil (1) nach einem der Ansprüche 1 bis 5,
**dadurch gekennzeichnet, ,**
**daß** die Drallkanäle (36) mittels Microerodieren in die Drallscheibe (35) eingebracht sind.

## Claims

1. Fuel injection valve (1) for fuel injection systems of internal combustion engines, having a valve seat body (5), which includes a valve seat surface (6) that interacts with a valve-closure body (4) to form a sealing seat,
a swirl disc (35), which has swirl channels (36) with a tangential component for swirl generation and is arranged upstream of the valve seat face (6) of the valve seat body (5), and
a swirl chamber (37) formed between the swirl disc (35) and the valve seat body (5),
**characterized in that** the minimum extent of flow paths arranged downstream of the swirl disc (35) in any desired direction is greater than the smallest diameter of each swirl channel (36) in the swirl disc (35) and **in that** the smallest diameter of each swirl channel (36) is smaller than the opening travel by which the valve-closure body (4) is raised from the valve seat face (6) during the opening movement.

2. Fuel injection valve according to Claim 1, **characterized in that** a multiplicity of swirl channels (36) are arranged on a plurality of concentric hole circles.

3. Fuel injection valve according to Claim 1 or 2, **characterized in that** the swirl channels (36) have different diameters.

4. Fuel injection valve according to one of Claims 1 to 3, **characterized in that** the swirl channels (36) have different orientations.

5. Fuel injection valve (1) according to one of Claims 1 to 4, **characterized in that** the swirl disc (35) includes at least 100 swirl channels (36).

6. Fuel injection valve (1) according to one of Claims 1 to 5, **characterized in that** the swirl channels (36) are introduced into the swirl disc (35) by means of laser drilling.

7. Fuel injection valve (1) according to one of Claims 1 to 5, **characterized in that** the swirl channels (36) are introduced into the swirl disc (35) by means of micro-erosion.

## Revendications

1. Injecteur de carburant (1) pour installations d'injection de carburant de moteurs à combustion interne, comprenant un corps de siège de soupape (5) qui présente une surface de siège de soupape (6) coopérant avec un obturateur de soupape (4) pour former un siège d'étanchéité,
une rondelle de tourbillonnement (35) qui présente des canaux de tourbillonnement (36) avec composante tangentielle pour générer le tourbillonnement et disposée en amont de la surface de siège de soupape (6) du corps de siège de soupape (5), et
une chambre de tourbillonnement (37) formée entre la rondelle de tourbillonnement (35) et le corps de siège de soupape (5),
**caractérisé en ce que**
l'étendue minimale de voies d'écoulement disposées en aval de la rondelle de tourbillonnement (35) est supérieure, dans une direction spatiale quelconque, au plus petit diamètre de chacun des canaux de tourbillonnement (36) dans la rondelle de tourbillonnement (35), et
le plus petit diamètre de chacun des canaux de tourbillonnement (36) est inférieur à la course d'ouverture qu'effectue l'obturateur de soupape (4) en se soulevant de la surface de siège de soupape (6) lors du mouvement d'ouverture.

2. Injecteur de carburant selon la revendication 1,
**caractérisé en ce qu'**
une multitude de canaux de tourbillonnement (36) est disposée sur plusieurs cercles perforés concentriques.

3. Injecteur de carburant selon la revendication 1 ou 2,
**caractérisé en ce que**
les canaux de tourbillonnement (36) présentent des diamètres différents.

4. Injecteur de carburant selon l'une quelconque des revendications 1 à 3,
**caractérisé en ce que**
les canaux de tourbillonnement (36) présentent des orientations différentes.

5. Injecteur de carburant (1) selon l'une quelconque des revendications 1 à 4,
**caractérisé en ce que**
la rondelle de tourbillonnement (35) présente au moins 100 canaux de tourbillonnement (36).

6. Injecteur de carburant (1) selon l'une quelconque des revendications 1 à 5,
**caractérisé en ce que**
les canaux de tourbillonnement (36) sont aménagés dans la rondelle de tourbillonnement (35) au moyen d'un perçage laser.

7. Injecteur de carburant (1) selon l'une quelconque des revendications 1 à 5,
**caractérisé en ce que**
les canaux de tourbillonnement (36) sont aménagés dans la rondelle de tourbillonnement au moyen d'une micro-érosion.
